Europäisches Patentamt

European Patent Office

Office européen des brevets

(19)

(11) Numéro de publication : **0 519 840 A1**

## (12) DEMANDE DE BREVET EUROPEEN

(21) Numéro de dépôt : **92401736.1**

(22) Date de dépôt : **22.06.92**

(51) Int. Cl.$^5$ : **F16D 1/08**

(30) Priorité : **20.06.91 FR 9107589**

(43) Date de publication de la demande :
**23.12.92 Bulletin 92/52**

(84) Etats contractants désignés :
**AT CH DE ES GB IT LI PT**

(71) Demandeur : **LES APPAREILS FERROVIAIRES**
**28, avenue de l'Opéra**
**F-75008 Paris (FR)**

(72) Inventeur : **Streb, Jean-Claude**
**1, Place du Gros Caillou, Villiers-le-Bel**
**F-95400 Arnouville (FR)**

(74) Mandataire : **Casalonga, Axel et al**
**BUREAU D.A. CASALONGA - JOSSE**
**Morassistrasse 8**
**W-8000 München 5 (DE)**

(54) **Dispositif pour l'assemblage de deux ou plusieurs éléments de machine.**

(57) Dispositif d'assemblage pour la fixation l'un à l'autre de deux ou plusieurs éléments de machine, notamment concentriques, comprenant au moins deux bagues concentriques (1, 2) fendues ayant chacune une surface (4, 8) cylindrique et une surface (5, 7) conique, ainsi que des organes de serrage (3) pour serrer les deux bagues axialement l'une dans l'autre.

Il est prévu, dans les fentes axiales (11, 13) des bagues (1, 2), au moins une section de matériau (12, 14), par exemple sous la forme de pont ou de voile faisant partie intégrante des bagues, pour empêcher une déformation intempestive des bagues fendues avant montage, sans opposer de résistance notable à la déformation des bagues par contraction ou dilatation radiale, lors du serrage des organes (3) de serrage axial.

Application : notamment à l'assemblage de moyeux et d'éléments analogues avec des arbres.

FIG. 2

EP 0 519 840 A1

La présente invention se rapporte à un dispositif d'assemblage pour la fixation l'un à l'autre de deux ou plusieurs éléments de machine, notamment concentriques, comprenant au moins deux bagues concentriques concentriques ayant chacune au moins une surface conique et une surface cylindrique, l'une au moins desdites bagues comportant une fente axiale et étant déformable radialement, les bagues coopérant l'une avec l'autre par leurs surfaces coniques et avec les éléments à fixer par leurs surfaces cylindriques, sous l'action d'au moins un organe de serrage axial dont le serrage provoque une contraction ou expansion radiale de ladite bague déformable.

De tels dispositifs d'assemblage sont bien connus (voir par exemple demande de brevet DE-A-2017149) et sont utilisés, sous divers modes de réalisation, couramment pour fixer de façon démontable des moyeux, roues et éléments analogues avec des arbres, le dispositif étant intercalé entre le moyeu et l'arbre à assembler.

La ou les bagues radialement déformables de ces dispositifs sont complètement fendues de part en part axialement, ce qui fait que ces bagues en acier ont tendance à se déformer, par exemple à se voiler ou à se contracter. Or, une telle déformation des bagues préalablement au montage du dispositif entre le moyeu et l'arbre à assembler fait que ce montage devient difficile, voire impossible, les bagues étant généralement conçues pour s'ajuster dans l'alésage du moyeu et sur l'arbre.

La présente invention vise à perfectionner un dispositif d'assemblage du type défini ci-dessus de manière que la ou les bagues déformables de ce dispositif ne puissent pas subir, préalablement au montage du dispositif, des déformations intempestives susceptibles de gêner, voire de compromettre ce montage.

Le dispositif d'assemblage conforme à l'invention pour la fixation l'un à l'autre de deux ou plusieurs éléments de machine, notamment concentriques, comprend au moins deux bagues ayant chacune au moins une surface conique et une surface cylindrique. L'une au moins desdites bagues comporte une fente axiale et est radialement déformable. Les bagues coopèrent l'une avec l'autre par leurs surface coniques et avec les éléments à fixer par leurs surfaces cylindriques sous l'action d'au moins un organe de serrage axial dont le serrage provoque une contraction ou expansion radiale de ladite bague déformable. Suivant l'invention, il est prévu, dans ladite fente axiale de ladite bague déformable, une section de matériau qui shunte ladite fente au moins partiellement et empêche une déformation intempestive de la bague, mais n'oppose pas de résistance notable à la déformation intentionnelle de la bague sous l'effet dudit organe de serrage.

Les bagues en acier ont généralement tendance à se contracter lorsqu'elles sont fendues axialement.

Par conséquent, ladite section de matériau destinée à empêcher une déformation préalablement au montage, peut être constituée par un élément rapporté dans la fente, par exemple un élément en forme de cale. Dans le cas d'une bague qui, au montage, doit être déformée par expansion, cette cale peut rester en place dans la fente. Dans le cas d'une bague qui doit être déformée par contraction, il suffit, après montage mais avant serrage du dispositif, de chasser cette cale de la fente pour permettre ensuite la déformation voulue par contraction de cette bague. Lorsque le matériau de l'élément rapporté en forme de cale est suffisamment déformable, cet élément peut rester en place dans la fente même dans le cas d'une bague qui doit être déformée par contraction, dans la mesure où la résistance opposée par cet élément lors du serrage du dispositif ne contrarie pas notablement la déformation de la bague.

En cas d'utilisation d'un tel élément rapporté, ce dernier peut bien entendu être constitué par un matériau différent du matériau de la bague.

Suivant un autre mode de réalisation applicable indifféremment à des bagues intérieures et à des bagues extérieures, ladite section de matériau prévue dans la fente de la bague fait partie intégrante de la bague. En d'autres termes, la bague n'est fendue que sur une partie de sa longueur axiale et ou de son l'épaisseur radiale et, lors du serrage du dispositif d'assemblage, cette section de matériau qui est suffisante pour s'opposer à une déformation intempestive de la bague subit une déformation plastique, c'est-à-dire permanente, donc une compression dans le cas d'une bague destinée à être déformée en contraction et un allongement pouvant aller jusqu'à la rupture dans le cas d'une bague destinée à être déformée par dilatation.

En se référant aux dessins schématiques annexés, on va décrire ci-après plus en détail plusieurs modes de réalisation illustratifs et non limitatifs d'un dispositif d'assemblage conforme à l'invention; sur les dessins :

la figure 1 est une vue axiale d'un premier mode de réalisation d'un dispositif conforme à l'invention à deux bagues;

la figure 2 est une coupe suivant II-II de la figure 1;

la figure 3 à 7 sont des coupes partielles de plusieurs variantes de bagues extérieures et de bagues intérieures du dispositif suivant les figures 1 et 2;

la figure 8 est une coupe axiale d'un dispositif conforme à l'invention à trois bagues.

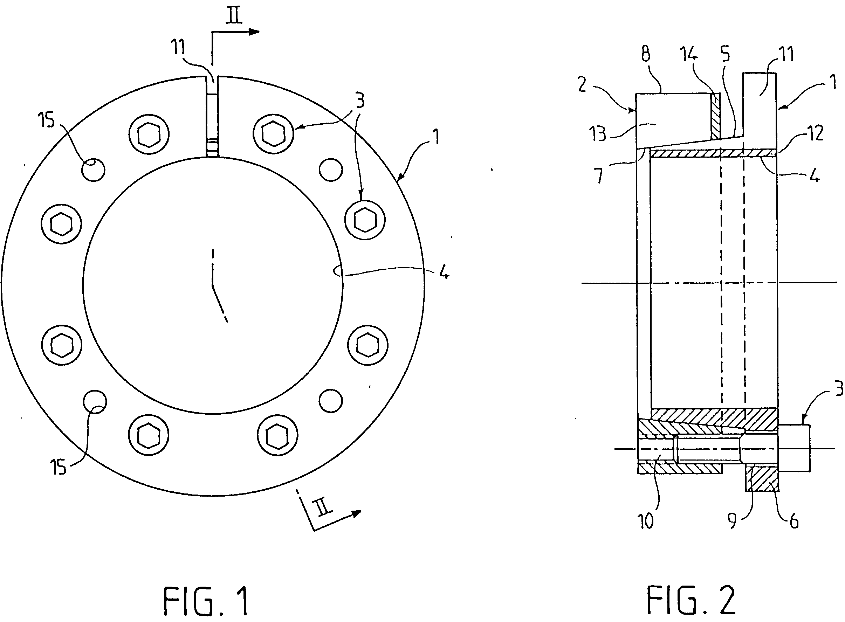

Le dispositif d'assemblage illustré par les figures 1 et 2 présente les caractéristiques générales d'un dispositif selon la demande de brevet DE-A-20 17 149 et est destiné à la fixation l'un à l'autre de deux éléments concentriques non réprésentés, par exemple un élément intérieur en forme d'arbre et un élément extérieur en forme de moyeu. Ce dispositif se compose d'une bague intérieure 1, d'une bague extérieure 2 et d'éléments de serrage axial 3 constitués par des vis.

La bague intérieure 1 présente une surface intérieure 4 cylindrique et une surface extérieure 5 conique qui, à son extrémité de plus grand diamètre, se raccorde à une bride extérieure 6.

La bague extérieure 2 présente une surface intérieure 7 conique et une surface extérieure 8 cylindrique.

La bague intérieure 1 comporte, dans sa bride 6, plusieurs trous de passage lisses axiaux 9 répartis sur un cercle, au nombre de huit dans l'exemple représenté, et la bague extérieure 2 présente un nombre correspondant de trous axiaux taraudés 10, ce qui permet d'engager les vis 3 à travers les trous 9 de la bride 6 de la bague intérieure 1 dans les trous taraudés 10 de la bague extérieure 2, en vue du serrage axial des deux bagues 1 et 2 l'une contre l'autre.

La bague intérieure 1 comporte une fente axiale 11 qui traverse la bague 1 de part en part axialement. Par contre, cette fente 11 ne traverse pas la bague 1 de part en part radialement, mais laisse subsister, au voisinage de la surface intérieure 4 cylindrique, un mince pont ou voile 12 de matière reliant entre eux les deux flancs de la fente 11.

De son côté, la bague extérieure 2 comporte une fente axiale 13 qui travers la bague 2 de part en part radialement, mais non pas axialement, laissant subsister à l'extrémité axiale de grand diamètre intérieur de la bague 2 un pont ou voile radial 14 de matière.

Il est à noter que les sections des deux voiles 12 et 13 doivent être choisies de manière que lesdits voiles empêchent toute déformation intempestive des bagues 1 et 2, mais n'opposent pas de résistance notable à la déformation intentionnelle des bagues 1 et 2, à savoir à la contraction de la bague intéreure 1 et à l'expansion de la bague extérieure 2, que les deux bagues 1 et 2 subissent lors du serrage des vis 3 du fait du glissement de la surface extérieure conique 5 de la bague intéreure 1 sur la surface intérieure conique 7 de la bague extérieure 2, de sorte que la surface intérieure cylindrique 4 de la bague intérieure 1 se trouve appliquée contre l'arbre et la surface extérieure cylindrique 8 de la bague extérieure 2 contre l'alésage du moyeu.

On reconnaît par ailleurs sur la figure 1 la présence de plusieurs trous taraudés 15 ménagés dans la bride 6 de la bague intérieure 1, ces trous taraudés 15 étant destinés, de façon connue en soi, à recevoir des vis de déblocage non représentées qui, engagées dans les trous 15 depuis le même côté de la bride 6 que les vis 3, permettent, après desserrage des vis 3, de débloquer les deux bagues 1 et 2 par leur serrage, leurs extrémités libres venant buter contre la bague 2.

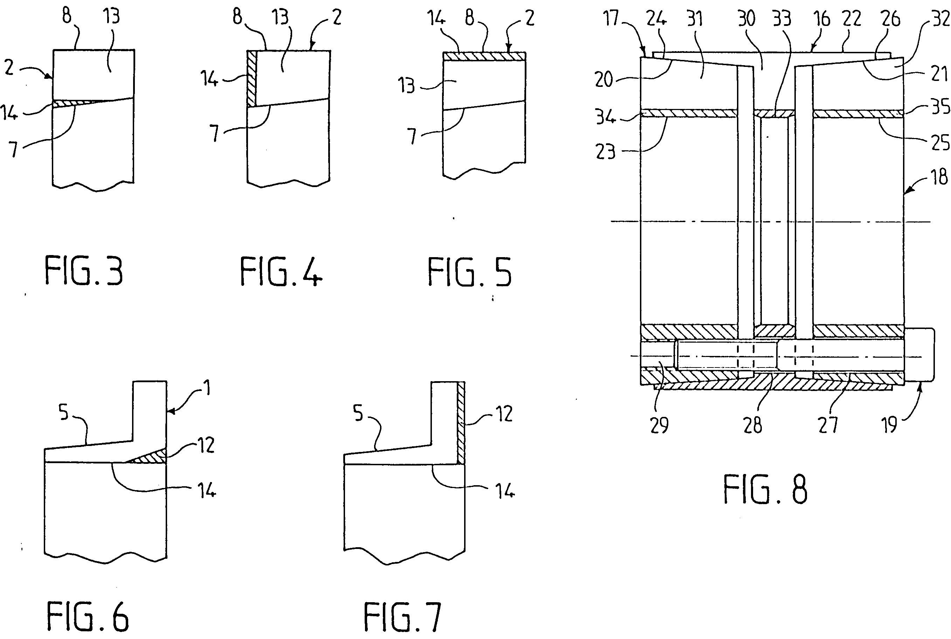

Les figures 3, 4 et 5 représentent des bagues extérieures 2 sur lesquelles le pont ou voile 14 radial, à une extrémité axiale de la bague 2, selon la figure 2 est remplacé par un pont ou voile axial intérieur, un pont radial à l'autre extrémité axial ou un pont axial extérieur, respectivement.

Sur les figures 6 et 7, le pont ou voile 12 axial intérieur de la fente 11 de la bague intérieure 1 selon la figure 2 a été remplacé par un pont ou voile triangulaire intérieur ou par un pont ou voile radial à une extrémité axiale, respectivement.

La figure 8 illustre un dispositif d'assemblage à trois bagues, de type connu en soi, comportant une bague extérieure 16, deux bagues intérieures 17, 18 et des vis 19 de serrage axial.

La bague extérieure 16 a une section transversale en T, avec deux surfaces intérieures 20, 21 coniques opposée et une surface extérieure 22 cylindrique.

La bague intérieure 17 présente une surface intérieure 23 cylindrique et une surface extérieure 24 conique, et la bague intérieure 18 présente une surface intérieure 25 cylindrique et une surface extérieure 26 conique.

La bague intérieure 18 et la bague extérieure 16 comportent plusieurs trous de passage lisses 27, 28 et la bague intérieure 17 des trous taraudés 29 pour les vis 19 servant à serrer les deux bagues intérieures 17 et 18 dans la bague extérieure 16.

Les trois bagues 16, 17, 18 comportent chacune une fente axiale 30, 31, 32 respectivement. Ces trois fentes 30, 31, 32 traversent les bagues 16, 17, 18 de part en part axialement, mais non pas radialement, laissant subsister, au voisinage des surfaces intérieures de ces bagues, des ponts ou voiles de matière 33, 34, 35 orientés axialement dans l'exemple représenté.

Il y a lieu de noter que les modes de réalisation décrits ci-dessus et illustrés par les dessins annexés, n'ont été donnés qu'à titre indicatif et non limitatif et de nombreuses modifications et variantes sont possibles dans le cadre de l'invention.

Ainsi, la disposition et l'orientation des ponts de matière subsistant dans les fentes des bagues peuvent être choisies à volonté, notamment en fonction de critères concernant la réalisation de ces fentes, par exemple par fraisage. Cela est valable bien entendu pour chacune des bagues du mode de réalisation à trois bagues de la figure 8.

Par ailleurs, au lieu de ces ponts ou voiles de la matière constitutive des bagues, il serrait possible, dans le cadre de l'invention, de réaliser les fentes axialement et radialement de part en part et de rapporter dans les fentes des sections de matériau, par exemple en forme de cale. De telles sections rapportées qui pourraient alors être réalisées en des matériaux autres que le matériau des bagues pourraient, soit être maintenues dans les fentes après montage du dipositif, soit par exemple être chassées après montage, de manière à ne gêner en aucune façon le serrage du dispositif.

Enfin, l'invention est applicable à tous les types de dispositifs d'assemblage et non pas seulement aux deux types représentés respectivement sur les figures 1 et 2 (deux bagues) et sur la figure 8 (trois bagues), pour l'assemblage de deux ou plus de deux éléments de machine qui peuvent être concentriques ou non.

## Revendications

1. Dispositif d'assemblage pour la fixation l'un à l'autre de deux éléments de machine, notamment concentriques, comprenant au moins deux bagues concentriques ayant chacune au moins une surface conique et une surface cylindrique, l'une au moins desdites bagues comportant une fente axiale et étant déformable radialement, les bagues coopérant l'une avec l'autre par leurs surfaces coniques et avec les éléments à fixer par leurs surfaces cylindriques, sous l'action d'au moins un organe de serrage axial dont le serrage provoque une contraction ou expansion radiale de ladite bague déformable, caractérisé par le fait qu'il est prévu, dans ladite fente axiale (11, 13, 30, 31, 3 2) de ladite bague déformable (1, 2, 16, 17, 18), une section de matériau (12, 14, 33, 34, 35) qui shunte ladite fente au moins partiellement et empêche une déformation intempestive de ladite bague, mais n'oppose pas de résistance notable à la déformation intentionnelle de ladite bague sous l'effet dudit organe de serrage (3, 19).

2. Dispositif suivant la revendication 1, caractérisé par le fait que ladite section de matériau est constitué par un élément rapporté dans ladite fente, par exemple un élément en forme de cale.

3. Dispositif suivant la revendication 2, caractérisé par le fait que ledit élément rapporté en forme de cale est constitué par un matériau différent du matériau de la bague.

4. Dispositif suivant la revendication 1, caractérisé par le fait que ladite section de matériau (12, 14, 33, 34, 35) fait partie intégrante de la bague (1, 2, 16, 17, 18).

5. Dispositif suivant la revendication 4, caractérisé par le fait que ladite section de matériau constitue un pont ou voile axial dans ladite fente.

6. Dispositif suivant la revendication 4, caractérisé par le fait que ladite section de matériau constitue un voile ou pont radial dans ladite fente.

FIG. 2

FIG. 1

FIG.3

FIG.4

FIG.5

FIG.6

FIG.7

FIG. 8

EP 0 519 840 A1

Office européen
des brevets

**RAPPORT DE RECHERCHE EUROPEENNE**

Numero de la demande

EP    92 40 1736

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 041 157 (SKF)<br>* le document en entier * | 1-3 | F16D1/08 |
| X | FR-A-2 148 797 (MINNESOTA MINING)<br>* le document en entier * | 1-3 | |
| X | FR-A-2 187 049 (FLüCK)<br>* le document en entier * | 1,4,5 | |
| X | US-A-3 232 076 (SUNDT)<br>* colonne 3, ligne 7 - ligne 49; figure 3 * | 1,4,5 | |
| X | DE-A-2 306 030 (ZEILER)<br>* le document en entier * | 1,4,5 | |
| X | US-A-2 141 915 (HULSE)<br>* le document en entier * | 1,4,5 | |
| X | FR-A-2 230 888 (SKF)<br>* le document en entier * | 1,4,5 | |
| X | US-A-1 805 201 (BIRMANN)<br>* le document en entier * | 1,4,6 | **DOMAINES TECHNIQUES RECHERCHES (Int. Cl.5)** |
| X | DE-U-8 612 933 (OVERBECK)<br>* page 10 - page 11; figures 2,3 * | 1,4,6 | F16D |
| X | GB-A-1 390 025 (BIBBY)<br>* page 3, ligne 53 - ligne 70; figures 7,8 * | 1,4,6 | |
| X | FR-A-957 526 (TAREX)<br>* page 2; figure 3 * | 1,4,6 | |
| X | DE-U-8 804 418 (SITEMA)<br>* page 7; figures 2,3 * | 1,4,6 | |

Le présent rapport a été établi pour toutes les revendications

| Lieu de la recherche | Date d'achèvement de la recherche | Examinateur |
|---|---|---|
| LA HAYE | 20 AOUT 1992 | BALDWIN D. R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)